# EUROPÄISCHE PATENTSCHRIFT

(11) **EP 2 418 066 B1**
(45) Veröffentlichungstag und Bekanntmachung des Hinweises auf die Patenterteilung: **05.12.2012**
(21) Anmeldenummer: 11006444.1
(22) Anmeldetag: 04.08.2011
(51) Int. Cl.: B29C 45/14, F01D 5/14

(54) **Spritzgießwerkzeug zur Herstellung eines hybriden Bauteils**
Injection moulding tool for producing a hybrid component
Outil de moulage par injection destiné à la fabrication d'un composant hybride

(30) Priorität: 09.08.2010 DE 102010033759
(43) Veröffentlichungstag der Anmeldung: 15.02.2012
(73) Patentinhaber: Rolls-Royce Deutschland & Co. KG, 158257 Blankenfelde-Mahlow (DE)
(72) Erfinder: Hechler-Stabbert, Gerald, 12101 Berlin (DE); Schult, Alexander, 10437 Berlin (DE)
(74) Vertreter: Schaeberle, Steffen

(56) Entgegenhaltungen:
- EP-A1- 2 113 358
- EP-A2- 0 776 749
- JP-A- 2007 307 769

## Beschreibung

Die Erfindung betrifft ein Spritzgießwerkzeug zur Herstellung eines aus einem mit einer Blechhülle ummantelten Kunststoffkörper bestehenden hybriden Bauteils, insbesondere einer im Nebenstromkanal eines Gasturbinentriebwerks angeordneten Leitschaufel, bestehend aus zwei Formwerkzeughälften mit einer der Form des Bauteils entsprechenden Innenkontur sowie einem Anguss zum Einbringen einer Kunststoffschmelze in die Blechhülle.

Aus der EP 2113358 A1 ist ein Verfahren zur Herstellung der Leitschaufeln für einen stromab des Fans einer Fluggasturbine angeordneten Leitschaufelkranz bekannt, bei dem zwei an den Rändern miteinander verschweißte Blechabschnitte in ein Spritzgießwerkzeug eingelegt und in den zwischen diesen verbleibenden Raum mit einer Spritzgießvorrichtung eine Kunststoffmasse injiziert wird. Durch den beim Einbringen der Kunststoffschmelze erzeugten Innendruck werden die Blechabschnitte entsprechend der Innenkontur der beiden Formwerkzeughälften verformt. Die Kunststoffmasse wird über einen stirnseitigen Anguss in die Blechhülle eingetragen. Das Verfahren und das dabei verwendete Angusskonzept sind insofern nachteilig, als die Kunststoffschmelze die Blechhülle aufgrund von Abdichtungsproblemen beim Einspritzen umfließen kann bzw. der erforderliche Druckaufbau in der Blechhülle zur vollständigen Ausformung des Bauteils nicht gewährleistet ist.

Der Erfindung liegt die Aufgabe zugrunde, ein Spritzgießwerkzeug der eingangs erwähnten Art so auszubilden, dass ein Umfließen der Blechhülle beim Injizieren der Kunst stoffschmelze verhindert wird und gleichzeitig aufgrund eines ausreichend hohen Innendrucks eine vollständige Ausformung des Bauteils entsprechend der Werkzeugkontur gewährleistet ist.

Erfindungsgemäß wird die Aufgabe mit einem gemäß den Merkmalen des Patenanspruchs 1 ausgebildeten Spritzgießwerkzeug gelöst.

Vorteilhafte Weiterbildungen der Erfindung sind Gegenstand der Unteransprüche.

Ausgehend von einem Spritzgießwerkzeug der eingangs erwähnten Art besteht der Grundgedanke der Erfindung darin, dass ein als integraler Bestandteil der unteren Formwerkzeughälfte ausgebildeter Anguss zur lagerichtigen Positionierung und Zuführung der Kunststoffschmelze in die eine Positionierungsöffnung aufweisende Blechhülle über die Innenfläche der Formwerkzeughälfte hinausragt, so dass die Kunststoffschmelze innerhalb der Blechhülle ausgetragen wird und nicht an dieser vorbei fließt. Eine an den Anguss angrenzende, in die Formwerkzeughälfte eingeformte Dichtungsnut, die einen unter der Wirkung des Innendrucks auf die Blechhülle elastisch verformbaren Dichtring aufnimmt und eine starre Dichtkante zu der Blechhülle bildet und die zusammen mit einem zwischen der Positionierungsöffnung und dem Anguss verbleibenden Spalt gleichzeitig die Funktionsweise einer Labyrinthdichtung erfüllt, sorgt ebenfalls dafür, dass die Kunststoffschmelze nicht an der Blechhülle vorbeifließt und die Blechhülle derart nach außen abgedichtet ist, dass mit dem Nachströmen der Kunststoffschmelze der erforderliche hohe Innendruck zur Umformung der Blechhülle erzeugt werden kann.

In Ausgestaltung der Erfindung ist die Querschnittsfläche der Dichtungsnut durch einen entlang dem Angussstutzen im Wesentlichen senkrecht verlaufenden Schenkel und einen sich zur Innenfläche der Formwerkzeughälfte schräg erstreckenden Schenkel bestimmt, wobei die Dichtkante einen stumpfen Winkel bildet.

In weiterer Ausgestaltung der Erfindung ist der Anguss in einem Randbereich der unteren Formwerkzeughälfte ausgebildet und einem abtrennbaren Randbereich des Bauteils zugeordnet.

In zweckmäßiger weiterer Ausgestaltung der Erfindung weist der Anguss einen sich konisch öffnenden Angusskanal auf.

In vorteilhafter Weiterbildung der Erfindung ragt der Anguss soweit über die Innenfläche der unteren Formwerkzeughälfte hinaus, dass dessen Schmelzgutaustrittsöffnung oberhalb der Innenfläche der Blechhülle liegt. Beispielsweise kann der Anguss mindestens 2 mm über die Innenfläche der unteren Formwerkzeughälfte hinaus ragen.

Der als O-Ring ausgebildete Dichtring besteht aus einem hitzebeständigen Material.

Ein Ausführungsbeispiel der Erfindung wird anhand der Zeichnung, in der
- Fig. 1: eine Teilansicht eines Leitschaufelkranzes mit zwischen einem Innen- und einem Außensegment angeordneten Leitschaufeln;
- Fig. 2: eine Schnittansicht einer Leitschaufel
- Fig. 3: eine schematische Darstellung eines Spritzgießwerkzeugs im Anfangsstadium des Injektionsprozesses zur Herstellung einer als hybrides Bauteil ausgebildeten Leitschaufel;
- Fig. 4: das Spritzgießwerkzeug nach Fig. 2 nach weiterer Infiltration der Kunststoffschmelze und während der vollständigen Ausformung der Blechhülle;
- Fig. 5: eine Detailansicht der Abdichtung im Bereich eines Angusses; und
- Fig. 6: eine Detailansicht der Abdichtung gemäß Fig. 4, jedoch zum Zeitpunkt eines erhöhten Innendrucks während der vollständigen Ausformung der Blechhülle;
zeigt, näher erläutert.

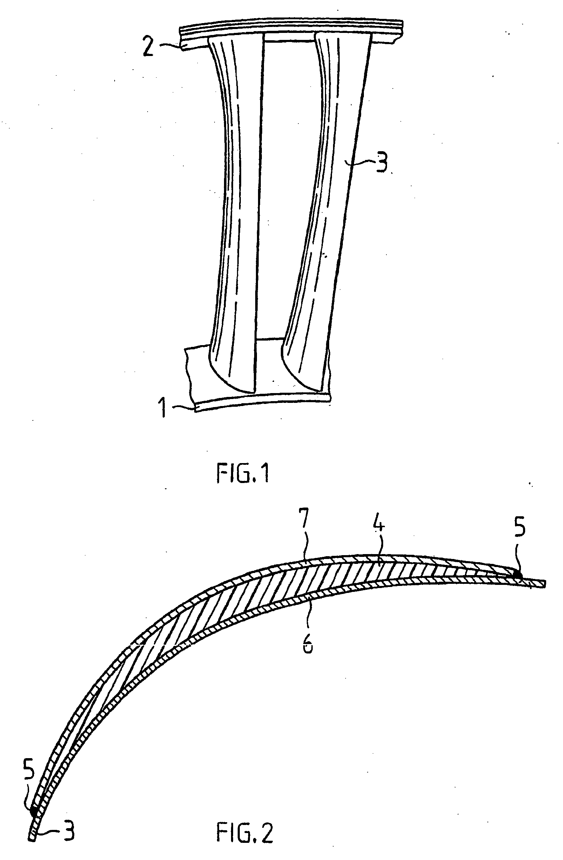

Die in Fig. 1 dargestellten, zwischen einem Innensegment 1 und einem Außensegment 2 angeordneten Leitschaufeln 3 sind Bestandteil eines stromab des Fans im Nebenstromkanal eines Gasturbinentriebwerks montierten Leitschaufelkranzes. Die Leitschaufeln 3 umfassen jeweils einen - hier aus glasfaserverstärktem Polyamid bestehenden - Kunststoffkörper 4, der mit einer aus zwei über Schweißnähte 5 verbundenen, folienartig dünnen Blechen 6, 7 gebildeten Blechhülle 8 ummantelt ist.

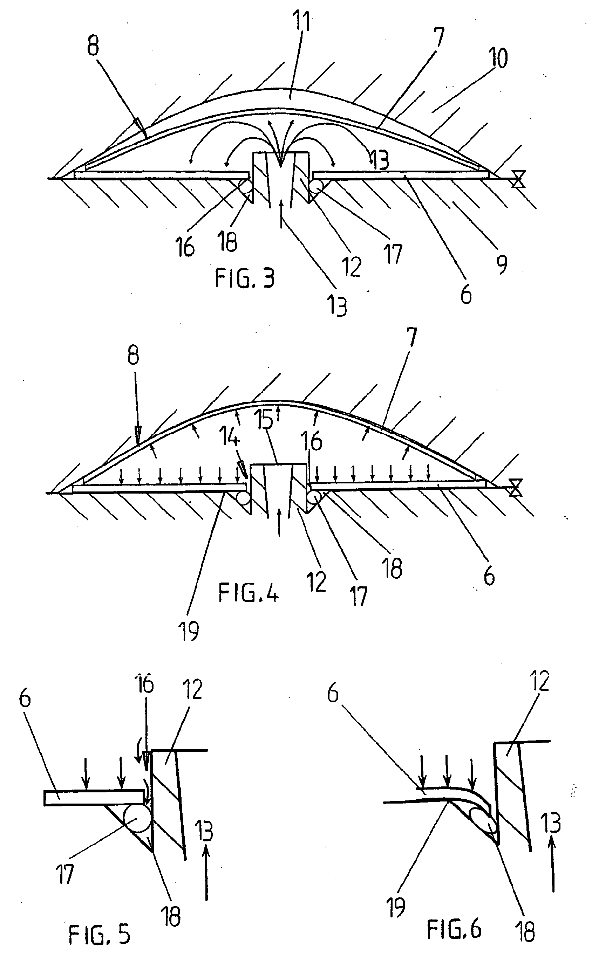

Die Herstellung der so ausgebildeten Leitschaufeln 3 erfolgt in einem in den Figuren 3 bis 6 schematisch dargestellten Spritzgießwerkzeug, das zwei zueinander verfahrbare - düsen- und fahrseitige (obere und untere) - Formwerkzeughälften 9, 10 umfasst. Bei geschlossenem Spritzgießwerkzeug schließen die beiden Formwerkzeughälften 9, 10 einen - hier vereinfacht dargestellten - Formhohlraum 11 ein, dessen Innenkontur mit der Außenkontur der zu fertigenden Leitschaufel 3 übereinstimmt. In der unteren Formwerkzeughälfte 9 ist ein über das Niveau der Innenfläche der unteren Formwerkzeughälfte 9 hinausragender Anguss 12 ausgebildet, der zur Zuführung einer gemäß dem vorliegenden Ausführungsbeispiel aus faserverstärktem Polyamid bestehenden Kunststoffschmelze (Pfeil 13) an eine Spritzgießvorrichtung (nicht dargestellt) angeschlossen ist.

Zur Herstellung des hybriden Bauteils (hier der Leitschaufel 3) wird zunächst die vorgefertigte Blechhülle 8 in die untere Formwerkzeughälfte 9 eingelegt. Der vorstehende Anguss 12 dient dabei zusätzlich zur lagerichtigen Positionierung der mit einer Positionierungsöffnung 14 versehenen Blechhülle 8, in die der Anguss 12 mit deutlichem Abstand des Anschnittes 15 von der Innenfläche des unteren Bleches 6 der Blechhülle 8 hineinragt. Dadurch ist sichergestellt, dass die nach dem Schließen des Spritzgießwerkzeugs (9, 10) von der Plastifiziereinheit zugeführte Kunststoffschmelze (Pfeil 13) tatsächlich in die Blechhülle 8 gelangt (Fig. 3) und nicht an dieser vorbei fließt.

Die Abdichtung im Bereich des zwischen der Öffnung 14 und dem Anguss 12 verbleibenden Spalts 16 erfolgt mit einem aus einem hitzebeständigen Material bestehenden Dichtring 17, der in eine in die untere Formwerkzeughälfte 9 einigeformte, unmittelbar an den Angussstutzen 12 anschließende Dichtungsnut 18 eingelegt ist. Die Querschnittsfläche der Dichtungsnut 18 ist durch einen entlang dem Angussstutzen 12 verlaufenden, im Wesentlichen senkrechten Schenkel und - nach einem verrundeten Übergang - einen schräg zur Innenfläche der unteren Formwerkzeughälfte 9 verlaufenden Schenkel bestimmt. Am Übergang von der Innenfläche der unteren Formwerkzeughälfte 9 und der Dichtungsnut 18 wird eine durch einen stumpfen Winkel definierte, die Blechhülle 8 kontaktierende Dichtkante 19 gebildet. Der schmale Spalt 16 zwischen der Positionierungsöffnung 14 und dem Anguss 12 bildet zusammen mit dem sich anschließenden großen Querschnitt der Dichtungsnut 18 eine Labyrinthdichtung. Mit dem weiteren Nachströmen der Kunststoffschmelze in die Blechhülle 8 wird in dieser ein allmählich wachsender Innendruck aufgebaut, durch den die Blechhülle 8 weiter umgeformt und durch weiter erhöhten Innendruck bis an die Innenkontur der beiden Formwerkzeughälften 9, 10 des Spritzgießwerkzeugs ausgeformt wird. Auch bei dem hohen Innendruck ist die Abdichtung durch das aus der Dichtungsnut 18 und dem Dichtring 17 gebildeten Dichtsystem gewährleistet, da das Blech 6 der Blechhülle 8 im Bereich der Dichtungsnut 18 auf den Dichtring gedrückt wird und diesen verformt und gleichzeitig an der um den Anschlussstutzen 12 umlaufenden Dichtkante 19 der Dichtungsnut 18 eine die Dichtwirkung weiter erhöhende Kantenpressung erzeugt wird. Das heißt, mit steigendem Innendruck wird die Dichtwirkung weiter verbessert, so dass ein stetiger Umformdruck auf die Blechhülle 8 zu deren vollständiger Umformung bis an die Innenkontur der beiden Formwerkzeughälften ausgeübt werden kann.

Das so gefertigte hybride Bauteil wird nach dem Auswerfen aus dem Spritzgießwerkzeug an den beiden Stirnseiten auf die erforderliche Länge der Leitschaufel 3 beschnitten, wobei auch der Angussbereich mit der Öffnung 14 zur Zuführung der Kunststoffschmelze entfernt wird, und anschließend fertig bearbeitet.

### Bezugszeichenliste

- 1: Innensegment
- 2: Außensegment
- 3: Leitschaufeln
- 4: Kunststoffkörper
- 5: Schweißnähte
- 6: unteres Blech
- 7: oberes Blech
- 8: Blechhülle aus 5 - 7
- 9: untere Formwerkzeughälfte
- 10: obere Formwerkzeughälfte
- 11: Formhohlraum
- 12: Anguss
- 13: Pfeil (Kunststoffschmelze)
- 14: Positionierungsöffnung in 8
- 15: Anschnitt (Schmelzgutaustrittsöffnung)
- 16: Spalt zwischen 12 und 14
- 17: Dichtring
- 18: Dichtungsnut
- 19: Dichtkante

## Patentansprüche

1. Spritzgießwerkzeug zur Herstellung eines aus einem mit einer Blechhülle (8) ummantelten Kunststoffkörper (4) bestehenden hybriden Bauteils, insbesondere einer im Nebenstromkanal eines Gasturbinentriebwerks angeordneten Leitschaufel (3), bestehend aus zwei Formwerkzeughälften (9, 10) mit einer der Form des Bauteils entsprechenden Innenkontur sowie einem Anguss (12) zum Einbringen einer Kunststoffschmelze in die Blechhülle (8), **dadurch gekennzeichnet, dass** der Anguss (12) integraler Bestandteil der unteren Formwerkzeughälfte (9) ist und zur lagerichtigen Positionierung und Zuführung der Kunststoffschmelze in die eine Positionierungsöffnung (14) aufweisende Blechhülle (8) über die Innenfläche der Formwerkzeughälfte (9) hinausragt, in der eine an den Anguss (12) angrenzende Dichtungsnut (18) eingeformt ist, die einen unter der Wirkung des Innendrucks auf die Blechhülle (8) elastisch verformbaren Dichtring (17) aufnimmt und eine starre Dichtkante (19) zu der Blechhülle (8) bildet und die zusammen mit einem zwischen der Positionierungsöffnung (14) und dem Angussstutzen (12) verbleibenden Spalt (16) gleichzeitig dem Funktionsprinzip einer Labyrinthdichtung folgt.

2. Spritzgießwerkzeug nach Anspruch 1, **dadurch gekennzeichnet, dass** die Querschnittsfläche der Dichtungsnut (18) durch einen entlang dem Anguss (12) im Wesentlichen senkrecht verlaufenden Schenkel und einen sich zur Innenfläche der Formwerkzeughälfte schräg erstreckenden Schenkel bestimmt ist, wobei die Dichtkante (19) einen stumpfen Winkel bildet.

3. Spritzgießwerkzeug nach Anspruch 2, **dadurch gekennzeichnet, dass** der Anguss (12) in einem Randbereich der unteren Formwerkzeughälfte (9) ausgebildet und einem abtrennbaren Randbereich des Bauteils zugeordnet ist.

4. Spritzgießwerkzeug nach Anspruch 1, **dadurch gekennzeichnet, dass** der Anguss (12) einen sich konisch öffnenden Angusskanal aufweist.

5. Spritzgießwerkzeug nach Anspruch 1, **dadurch gekennzeichnet, dass** der Anguss (12) soweit über die Innenfläche der unteren Formwerkzeughälfte (9) hinausragt, dass dessen Anschnitt (15) oberhalb der Innenfläche der Blechhülle (8) liegt.

6. Spritzgießwerkzeug nach Anspruch 1, **dadurch gekennzeichnet, dass** der Dichtring (17) aus einem hitzebeständigen Material besteht.

## Claims

1. Injection moulding tool for the manufacture of a hybrid component including a plastic element (4) sheathed with a sheet-metal shell (8), in particular a guide vane (3) arranged inside the bypass flow duct of a gas-turbine engine, with the tool consisting of two mould halves (9, 10) having an inner contour matching the shape of the component and a gate (12) for injecting a plastic melt into the sheet-metal shell (8), **characterized in that** the gate (12) is an integral part of the lower mould half (9) and for correct positioning and supply of the plastic melt projects beyond the inner surface of the mould half (9) into the sheet-metal shell (8) having a positioning opening (14), with a sealing groove (18) adjoining the gate (12) being formed in the mould half (9), said groove (18) receiving a sealing ring (17) elastically deformable under the effect of the internal pressure on the sheet-metal shell (8), forming a rigid sealing edge (19) to the sheet-metal shell (8) and at the same time performing the function of a labyrinth seal together with a gap (16) remaining between the positioning opening (14) and the gate (12).

2. Injection moulding tool in accordance with Claim 1, **characterized in that** the cross-sectional surface of the sealing groove (18) is determined by a side running substantially vertically along the gate (12) and by a side extending obliquely to the inner surface of the mould half, with the sealing edge (19) forming an obtuse angle.

3. Injection moulding tool in accordance with Claim 2, **characterized in that** the gate (12) is provided in an edge area of the lower mould half (9) and is associated with a separable edge area of the component.

4. Injection moulding tool in accordance with Claim 1, **characterized in that** the gate (12) has a conically opening gate runner.

5. Injection moulding tool in accordance with Claim 1, **characterized in that** the gate (12) projects beyond the inner surface of the lower mould half (9) to the extent that its ingate (15) is above the inner surface of the sheet-metal shell (8).

6. Injection moulding tool in accordance with Claim 1, **characterized in that** the sealing ring (17) is made of a heat-resistant material.

## Revendications

1. Outil de moulage par injection destiné à fabriquer un composant hybride constitué d'un corps en matière synthétique (4) revêtu d'une enveloppe métallique (8), en particulier une aube fixe (3) disposée dans le canal de flux secondaire d'un moteur à turbine à gaz, ledit outil étant composé de deux moitiés d'outil de moulage (9, 10) avec un contour intérieur correspondant à la forme du composant, ainsi que d'un culot d'injection (12) destiné à amener une matière synthétique fondue dans l'enveloppe métallique (8), **caractérisé en ce que** le culot d'injection (12) est partie intégrante de la moitié d'outil de moulage inférieure (9) et, pour le positionnement et l'acheminement corrects de la matière synthétique fondue dans l'enveloppe métallique (8) présentant un orifice de positionnement (14), fait saillie sur la face intérieure de la moitié d'outil de moulage (9) dans laquelle est formée une gorge d'étanchéité (18) adjacente au culot d'injection (12), qui loge une bague d'étanchéité (17) déformable par élasticité sous l'effet de la pression interne sur l'enveloppe métallique (8) et forme un bord d'étanchéité rigide (19) par rapport à l'enveloppe métallique (8) et qui, conjointement avec une fente résiduelle (16) entre l'orifice de positionnement (14) et le culot d'injection (12), répond en même temps au principe de fonctionnement d'une garniture en labyrinthe.

2. Outil de moulage par injection selon la revendication n° 1, **caractérisé en ce que** la surface de la coupe transversale de la gorge d'étanchéité (18) est déterminée par une branche s'étendant pour l'essentiel verticalement le long du culot d'injection (12) et par une branche en biais par rapport à la face intérieure de la moitié d'outil de moulage, le bord d'étanchéité (19) formant un angle obtus.

3. Outil de moulage par injection selon la revendication n° 2, **caractérisé en ce que** le culot d'injection (12) est formé dans une zone marginale de la moitié d'outil de moulage inférieure (9) et associé à une zone marginale séparable du composant.

4. Outil de moulage par injection selon la revendication n° 1, **caractérisé en ce que** le culot d'injection (12) présente un canal d'injection s'ouvrant de manière conique.

5. Outil de moulage par injection selon la revendication n° 1, **caractérisé en ce que** le culot d'injection (12) fait saillie sur la face intérieure de la moitié d'outil de moulage inférieure (9) à tel point que son entrée (15) est située au-dessus de la face intérieure de l'enveloppe métallique (8).

6. Outil de moulage par injection selon la revendication n° 1, **caractérisé en ce que** la bague d'étanchéité (17) est constituée d'un matériau thermorésistant.
